# EUROPEAN PATENT SPECIFICATION

(11) **EP 1 629 961 B1**
(45) Date of publication and mention of the grant of the patent: **16.04.2008**
(21) Application number: 05255256.9
(22) Date of filing: 26.08.2005
(51) Int. Cl.: B29D 11/00, B29C 35/00

(54) **Masked precure of contact lenses:systems and methods therefor**
Vorvernetzung mit einer Maske von Kontakt-Linsen: Anlage and Verfahren
Prédurcissement au moyen d'un masque des lentilles de contact: systèmes et procédé

(30) Priority: 27.08.2004 US 927843
(43) Date of publication of application: 01.03.2006
(73) Proprietor: Johnson & Johnson Vision Care, Inc., Jacksonville, FL 32256 (US)
(72) Inventor: Powell, Mark P., Jacksonville, Florida 32258 (US); Young, Kent, Jacksonville, Florida 32256 (US); Sanders, Kerry T., Jacksonville, Florida 32225-2824 (US); Kernick, Edward R., Jacksonville, Florida 32223 (US)
(74) Representative: Mercer, Christopher Paul

(56) References cited:
- US-A- 4 701 288
- US-A- 4 702 574
- US-A1- 2003 000 028
- US-A1- 2003 035 083
- US-B1- 6 220 845

## Description

### FIELD OF THE INVENTION

The present invention generally relates to devices and methods for molding soft contact lenses. The present invention particularly relates to devices and method for selectively precuring pigmented polymerizable monomers under pressure to form soft contact lenses.

### BACKGROUND OF THE INVENTION

The development and manufacture of soft contact lenses is an important medical application of polymer science and technology. Soft (*e.g.,* "hydrogel") contact lenses are typically made by polymerizing a monomer mixture using lens molds. The lens mold geometry and lens composition typically establishes the optical properties of the completed lens. Typically, a front curve lens mold receives a liquid monomer mixture and a back curve lens mold is pressed in the liquid monomer mixture. Polymerization of the monomer mixture is typically activated by using ultraviolet light, for example, by use of an ultraviolet light catalyst. After polymerization is essentially completed, the lens molds are removed and the lenses are washed and hydrated.

Tinted contact lenses have become very popular as a way to cosmetically enhance or alter the color of one's eyes. Many colorants are typically composed of a binding polymer and pigments to produce tinted lenses. The colorant is generally applied to uncured lens material by diffusion from a mold surface to the lens material, and the lens material is subsequently cured. Various methods of manufacturing tinted contact lenses are described in United States Application Publication No. 2003/0000028 by Molock et al., "*Colorants for use in tinted contact lenses and methods for their production*" which discloses the preamble of claim 21. For example, colorant transfer can be carried out using a printing pad containing a colorant composition that is pressed against a molding surface of an optical mold. The colorant composition, which typically includes a solvent component, is allowed to dry to provide tinted lens molds. The monomer mixture is added to the tinted lens molds, the colorant diffuses into the lens material, and the monomer mixture is polymerized.

The polymerization of a monomer with ultraviolet light to form soft contact lenses in untinted contact lenses is well described in the patent art. For example, U.S. Pat. No. 6,220,845 to Martin et al.*,* is directed to "*Mold Clamping and Precure ofa Polymerizable Hydrogel* "*.* The abstract of this patent describes an apparatus and method for partially curing a polymerizable monomer or monomer mixture to form a soft contact lens. Also described is a device for transporting a plurality of contact lens molds to a precure station in a low oxygen environment, each contact lens mold including a first and second mold half with a polymerizable monomer or monomer mixture therebetween. A mask is described having a plurality of mold engagement members that clamps a first contact lens mold half against a second contact lens mold half for a predetermined pressure and time. While the mold halves of the contact lens mold are clamped, the polymerizable monomer or monomer mixture is exposed to a radiant energy source for polymerizing the polymerizable monomer or monomer mixture contained in each contact lens mold.

US-A-4 702 574 and US-A-4 701 288 also disclose methods and systems to make coloured contact lenses.

Current contact lens manufacturing technology allows various wavelengths of light to irradiate the reactive monomer mixture. The time needed for precure irradiation is short compared to the time needed for essentially complete polymerization. However, we have now discovered that such monomer precuring reduces or prevents the diffusion of colorants and monomers in preparing tinted contact lens. While not being bound by a particular theory of operation, it appears that precuring increases the viscosity of the lens forming material and prevents diffusion of the monomer into the pre-printed colorant layer.

### SUMMARY OF THE INVENTION

The present inventors have now developed methods and systems for making tinted contact lenses that overcome the problems associated with keeping the contact lens molds securely closed while permitting colorants and monomers to diffuse. Accordingly, the present invention provides methods, that include providing a contact lens mold assembly comprising a first contact lens mold half a second contact lens mold half positioned proximately to said first contact lens mold half, at least one of the first and second contact lens mold halves comprising a color layer, and a curable lens-forming material positioned between the first and second contact lens mold halves, said curable lens-forming material in contact with at least one of the contact lens mold halves and said color layer, precuring at least a portion of the curable lens-forming material in contact with at least one of the contact lens mold halves, the portion of the curable lens-forming material in contact with said color layer remaining substantially uncured as set out in claim 1.

The present inventors have also developed systems for preparing tinted contact lenses. These systems include a contact lens mold assembly that includes a first contact lens mold half, a second contact lens mold half positioned proximately to said first contact lens mold half, at least one of the first and second contact lens mold halves comprising a color layer, a mask in contact with at least one of the mold halves, said mask comprising a plurality of openings capable of passing radiation therethrough, said plurality of openings positioned to irradiate at least a portion of a curable lens-forming material in contact with at least one of the mold halves, and a radiation source for providing radiation capable of precuring said curable lens-forming material as set out in claim 21.

Other aspects of the present invention will be apparent to those skilled in the art in view of the detailed description and drawings of the invention as provided herein.

### BRIEF DESCRIPTION OF THE DRAWINGS

The foregoing summary, as well as the following detailed description, is further understood when read in conjunction with the appended drawings. For the purpose of illustrating the invention, the drawings show exemplary embodiments of the invention; however, the invention is not limited to the specific methods, compositions, and devices disclosed. In the drawings:

FIG. 1 is a partially cut away elevational view of one of the embodiments for precuring a polymerizable monomer or monomer mixture to form a soft contact lens.

FIG. 2 is an end elevational view of the apparatus illustrated in FIG. 1.

**FIG. 3** is a diagrammatic and schematic illustration of one embodiment of the invention.

**FIG. 4** is a plan view of a pallet carrier used to transport a plurality of contact lens molds having a polymerizable monomer or monomer mixture therebetween to and from a precure station.

**FIG. 4(a)** is a diagrammatic cross-sectional view of a pair of mold halves in the pallet carrier of **FIG. 4****.**

**FIG. 5(a)** is a diagrammatic illustration of an air driven mask for masking radiation and holding the mold halves together.

**FIG. 5(b)** is a diagrammatic illustration of a spring driven mask for masking radiation and holding the mold halves together.

**FIG. 5(c)** is a top perspective view of a mask used in the present invention. The mask as illustrated includes a cone for directing radiation through the openings.

**FIG. 5(d)** is a bottom perspective view of the mask illustrated in **FIG. 5(c)****.**

**FIG. 5(e)** is an elevational view of the mask illustrated in **FIG. 5(c)****.**

**FIG. 5(f)** is a bottom view of the mask illustrated in **FIG. 5(e)****.**

**FIG. 5(g)** is a sectional view along line B-B of the mask illustrated in **FIG. 5(f)****.**

**FIG. 5(h)** is a diagrammatic illustration of one embodiment of a system of the present invention.

**FIG. 5(i)** is a diagrammatic illustration of the system illustrated in **FIG. 5(h)** wherein the mask is disengaged from the back curve mold.

**FIG. 6** is a plan view of a reciprocating portion of the apparatus for precuring a curable lens-forming material to form a contact lens.

**FIG. 7** is an elevational view of the apparatus illustrated in **FIG. 6****.**

**FIG. 8** is an end elevational view of the apparatus illustrated in **FIG. 6****.**

**FIG. 9** is an elevational end view of a second embodiment of the present invention used to precure curable lens-forming material to form a soft contact lens.

**FIG. 10** is an elevational side view of the apparatus illustrated in **FIG. 9****.**

**FIG. 11** is a photogaph of a holding tray holding a plurality of masks.

### DETAILED DESCRIPTION OF ILLUSTRATIVE EMBODIMENTS

The present invention may be understood more readily by reference to the following detailed description and the accompanying figures and examples. It is to be understood that this invention is not limited to the specific devices, methods, conditions or parameters described and/or shown herein. The terminology used herein describes particular embodiments by way of example only and is not intended to be limiting of the claimed invention. Also, as used in the specification including the appended claims, the singular forms "a," "an," and "the" include the plural. In addition, reference to a particular numerical value includes at least that particular value, unless the context clearly dictates otherwise, and all ranges are inclusive and combinable. Similarly, when values are expressed as approximations, by use of the antecedent "about," it will be understood that the particular value forms another embodiment.

In one aspect, the present invention provides methods that comprise providing a contact lens mold assembly that includes a first contact lens mold half, a second contact lens mold half positioned proximately to the first contact lens mold half, at least one of the first and second contact lens mold halves comprising a color layer; and a curable lens-forming material positioned between the first and second contact lens mold halves, the curable lens-forming material in contact with at least one of the contact lens mold halves and the color layer. These methods include precuring at least a portion of the curable lens-forming material in contact with at least one of the contact lens mold halves, the portion of the curable lens-forming material in contact with the color layer remaining substantially uncured. The portion of the precured lens-forming material typically helps to keep the contact lens mold assembly intact during subsequent processing steps, such as transporting through additional heating zones where no irradiation is present, or transporting into one or more curing zones where irradiation is present to fully cure the lens-forming material.

In certain embodiments of the present invention, the methods include heating the color layer, the first mold half, the second mold half, the curable lens-forming material, or any combination thereof. Heating of these components is typically carried out by conduction, such as by use of heating cartridges or heating coils embedded in a suitable pallet or holder, or by convection, such as by use of a heated gas. Heating typically helps achieve diffusion of the colorant and the curable lens-forming material. In certain embodiments, the heating increases the temperature by an amount typically from about 5°C to about 50°C, more typically from about 10°C to about 40°C. In certain embodiments the curable lens-forming material is precured at a temperature in the range of from about 25°C to about 95°C, more typically from about 35°C to about 85°C, even more typically from about 40°C to about 70°C, and most typically from about 45°C to about 60°C.

In certain embodiments of the present invention, the precuring is effected by subjecting at least a portion of the curable lens-forming material in contact with the first contact lens mold to a form of electromagnetic radiation or a particle beam that can produce or initiate a chemical reaction. Suitable types of radiation include actinic radiation. As used herein, "actinic radiation" means electromagnetic radiation that can produce photochemical reactions, such as ultraviolet radiation, infrared radiation, visible light and X-rays. Suitable particle beams include electrons. The radiation preferably is provided by an ultraviolet lamp that irradiates the curable lens-forming material at about 2 to 4 mW/cm² for about 5 to about 60 seconds, more preferably for about 20 to about 40 seconds. Radiation may also be provided by a high intensity UV source that is pulsed or cycled.

Irradiating the portion of the curable lens-forming material that is in contact with the lens mold while avoiding irradiation of the lens-forming material in contact with the color layer is typically carried out by using a mask. In many embodiments, ultraviolet radiation is shaped using a mask, such as one having a plurality of openings. In certain embodiments the plurality of openings includes slits, holes, or any combination thereof. Typically, the plurality of openings on the mask are aligned between the radiation source and the lens molds in a way that allows the radiation to pass the radiation to the portion of the curable lens-forming material that is in contact with the lens mold. For round layers that are centrally positioned in a contact lens, the openings are typically azimuthally arranged around the color layer. A suitable material is selected for the mask to block (e.g., absorb, reflect, or both absorb and reflect) the radiation. Suitable mask materials are readily fabricated such as by machining or lithography to provide the plurality of openings. Suitable mask materials typically include a metal, such as brass, stainless steel, or tungsten, or a metal composite material. Mask materials can also be coated on substrates, such as by plating a suitable metal or plastic substrate with titanium nitride or chrome.

In certain preferred embodiments of the present invention, the mask holds the contact lens mold halves together using a suitable pressure. Two masks may be supplied that hold the contact lens molds together, but typical embodiments hold the contact lens molds between one mask and a suitable mold holder, such as a pallet. By "suitable pressure" is meant that the mask is capable of exerting a force over an area to sufficiently hold the contact lens mold halves together to form the curable lens-forming material into the shape of a contact lens. The pressure is typically held long enough until the lens forming material precures to a level sufficient to hold the mold halves together after the pressure is released. Any type of force for holding the mold halves together is suitable, such as by use of a clamping force, an air cylinder, a spring driven cylinder, a magnetic force, an electrostatic force, a molecular force, an accelerating force, a gravitational force, or any combination thereof.

Suitable masks include mass sufficient under the influence of gravity or acceleration to exert a pressure. The pressure that is exerted by the mask suitably presses one of the contact lens mold halves into the curable lens-forming material. In one embodiment, the first lens mold half is held in place by a pallet. The first lens mold half (e.g., a front curve mold) contains a color layer in the concave portion, and a liquid curable lens-forming material is deposited into the concave portion. A second lens mold half (e.g., a back curve mold) is placed convex side into the liquid curable lens-forming material. A mask having a plurality of azimuthally arranged slits and sufficient mass is placed atop the second mold half, the mass of which under the influence of gravity presses the second mold half against the first mold half. The resulting space between the mold halves forms the contact lens. A portion of the lens material that contacts the lens molds and substantially does not contact the color layer is precured by action of ultraviolet radiation passing through the plurality of openings of the mask.

In certain embodiments of the present invention, the precuring may take place in an air environment, a low oxygen environment, an inert environment, or any combination thereof. As used herein, the term "low oxygen environment" refers to an atmosphere having less than about half the concentration of oxygen that is present in one atmosphere pressure air at 20°C. As used herein, the term "inert environment" refers to an atmosphere having less than about one percent by weight of the concentration of oxygen that is present in one atmosphere pressure air at 20°C. Various environments can be encountered in embodiments in which the precuring lens molds are moving through a manufacturing line having varying atmospheric compositions. In certain embodiments, for example, the atmospheric composition is inert during assembly (e.g., filing and compression) of the curable lens-formable material between the lens mold halves. In a subsequent precuring stage, the assembled lens molds are precured using ultraviolet light, at which point the oxygen content of the surrounding atmosphere may be higher than that of an inert atmosphere. For example, a suitable contact lens manufacturing line may include molding, printing, filling, assembling, precuring, curing, hydrating, washing, and packaging stages. Accordingly, a variation (*e.g.,* gradient) in atmospheric oxygen content is envisioned between assembly (e.g., under inert conditions) and curing (e.g., in atmospheric air).

In one embodiment of the present invention, at least one of the first and second lens mold halves includes a clear layer in contact with the color layer. Suitable clear layers typically include a polymer film that is in contact with the curable lens-forming material, and preferably the clear layer is in contact with the at least one of the first and second lens mold halves. Although the clear layer and the color layer may be each on different mold halves, the clear layer is typically positioned on the same mold half as that of the color layer. The clear layer is typically positioned in contact with the front curve lens mold, with the color layer adjacent to the clear layer. Addition of the curable lens-forming material, assembly of the two lens mold halves and precuring is then carried out as provided herein.

In certain aspects of the present invention, the viscosity of the curable lens-forming material in contact with the color layer remains essentially the same or decreases as the curable lens-forming material in contact with at least one of the mold halves precures. In these embodiments, radiation is suitably masked so that the lens-forming material in contact with the color layer receives little or no radiation. While not being bound by any particular theory of operation, with little or no radiation the lens-forming material essentially remains uncured so that the viscosity of the lens-material in the vicinity of the color layer remains unchanged. Keeping the lens-forming material essentially uncured helps the diffusion of the colorant into the lens-forming material. In certain embodiments in which the lens-forming material is heated, the viscosity may actually decrease as the lens-forming material precures. This decrease in viscosity may also increase the diffusion of the colorant into the lens-forming material. In similar the embodiments, the viscosity of the curable lens-forming material in contact with the optical surface increases during precuring, this increase giving rise to the lens mold assembly remaining intact during subsequent processing steps.

The present invention also provides systems comprising a contact lens mold assembly that includes a first contact lens mold half, a second contact lens mold half positioned proximately to the first contact lens mold half, at least one of the first and second contact lens mold halves comprising a color layer, a mask in contact with at least one of the mold halves, the mask comprising a plurality of openings capable of passing radiation therethrough, the plurality of openings positioned to irradiate at least a portion of a curable lens-forming material in contact with at least one of the mold halves, and a radiation source for providing radiation capable of precuring the curable lens-forming material. In these systems, at least one of the first and second contact lens mold halves that include the color layer typically includes a clear layer positioned between the contact lens mold half and the color layer. Suitable masked compression devices (*i.e.* "masks") typically include a plurality of openings, such as slits, holes, or any combination thereof. The plurality of openings are typically azimuthally arranged, such as in the shape of a ring around the color layer of the contact lens. Suitable masks typically include mass sufficient under the influence of gravity or acceleration to exert pressure between the mold halves.

Certain preferred systems further include one or more heaters for heating the color layer, the first mold half, the second mold half, the curable lens-forming material, or any combination thereof. Suitable heaters include heating cartridges or heating coils embedded in a suitable pallet or holder, air guns, and heat lamps for irradiative heating. Without being bound by a particular theory of operation, it is believed that heating typically helps the colorant diffuse into the curable lens-forming material.

In certain preferred systems and methods, a polymerizable monomer or monomer mixture is deposited into a lens mold having first concave and second convex mold halves. The mold halves are typically formed of a material at least partially transparent to ultraviolet or visible radiation, such as polystyrene or a polyolefin. The mold halves are transported from a deposition and mold assembly station to a precure station, and held together under predetermined pressure for a predetermined period of time. The mold halves typically are transported in a low oxygen environment. The second or convex mold half may be slightly thinner than the first or concave mold half to enable mold compliance during cure as the monomer is polymerized. The pressure aligns flanges present on the first and second mold halves that help align the respective curves of the molds. In preferred embodiments, the pressure also seats the second convex mold half against an annular edge formed on the first mold half and, thereby, to essentially sever any excess monomer from the monomer contained within the mold. After a predetermined period, a pigment containing monomer mixture is exposed to radiation, such as an UV light source, to partially cure (*i.e.,* precure) the monomers that reside chiefly around the perimeter of the mold assembly. During this period, heated air is blown directly on a concave mold half to quickly heat the polymerizable monomer mixture and pigmented polymer material to a predetermined temperature. After a second predetermined period of UV exposure under pressure, the pressure and the radiation are typically removed, and the contact lens mold assembly containing the selectively precured lens material is transported through a heated area. Diffusion of the polymerizable monomer mixture into the pigmented polymeric colorant contained on the concave mold surface is typically carried out in a suitable heating area having essentially no light source or visible radiation. The mold assembly is subsequently transported to a curing station for further polymerization and curing of the lens-forming material.

Certain systems of the present invention selectively procure a polymerizable monomer or monomer mixture to form a soft contact lens that does not impede diffusion of a pigmented polymeric colorant layer. These systems typically include a transport for intermittently moving a plurality of contact lens mold assemblies to a precure station in a low oxygen or air filled environment. The contact lens mold assemblies suitably include first and second mold halves with a polymerizable monomer or monomer mixture, and pigmented polymeric colorant there between. These embodiments also include a plurality of devices for holding the first mold half and the second mold half for a predetermined period of time in an inert, low oxygen or air environment. Selected areas of the polymerizable monomer or monomer mixture are then exposed to radiation for a predetermined period of time while under pressure to partially or completely cure the monomer or monomer mixture in the selected exposed areas. The pressure is typically applied by suitable device such as an annular air cylinder, spring driven annular cylinder, physical weight, or any combination thereof. Such devices typically include a mask to allow radiation to pass through a suitable opening or openings in the device that directs the radiation away from the center of the mold halves. The radiation then passes through selected areas of one or more of the mold halves and into the monomer or monomer mixture. The systems also typically include a controller for controlling the duration and intensity of the pressure (e.g., holding pressure), and the duration and intensity of the radiation. Typically, the systems of the present invention include a holding device that provides radially uniform pressure to hold the contact lens mold halves evenly together.

Certain methods of the present invention selectively precure a polymerizable monomer or monomer mixture in forming a soft contact lens. A polymerizable monomer or monomer mixture is deposited in a contact lens mold assembly having first concave and second concave mold halves with the monomer and a pigmented polymeric colorant therebetween. The mold halves are held together under pressure and exposed to radiation to partially polymerize selected areas of the monomer or monomer mixture to a precured get-like state. The holding pressure is relieved and the lens is cured with additional radiation or a combination of heat and radiation. Typically, the mold halves are held together and aligned with pressure, which causes excess monomer to be exuded out of the mold cavity. At least a portion of the polymerizable monomer or monomer mixture is precured in selected areas, preferably in the exuded portion, to a gel-like state. A shrinkage of the monomer typically results that gives rise to a compliance of the mold halves that seals and holds the mold halves together for the remainder of the cure period. This phenomena helps to avoid decentration defects than can occur if the back curve mold half is tipped or rotated with respect to the front curve mold half prior to cure. The holding pressure can be varied during the precure step, such as by use of a pneumatic cylinder or electromagnetic solenoid that engages or is integral to the mask. Suitably, the surface energy attraction is minimized between the holding device (e.g., "clamping means") and the mold halves while simultaneously providing a radially uniform holding pressure during precuring. As used herein, the term "clamping means" refers to any device or force that is suitable for holding a mold assembly together. In preferred embodiments the mask used in the present invention includes the clamping means, although other embodiments may have the mass separate from the clamping means.

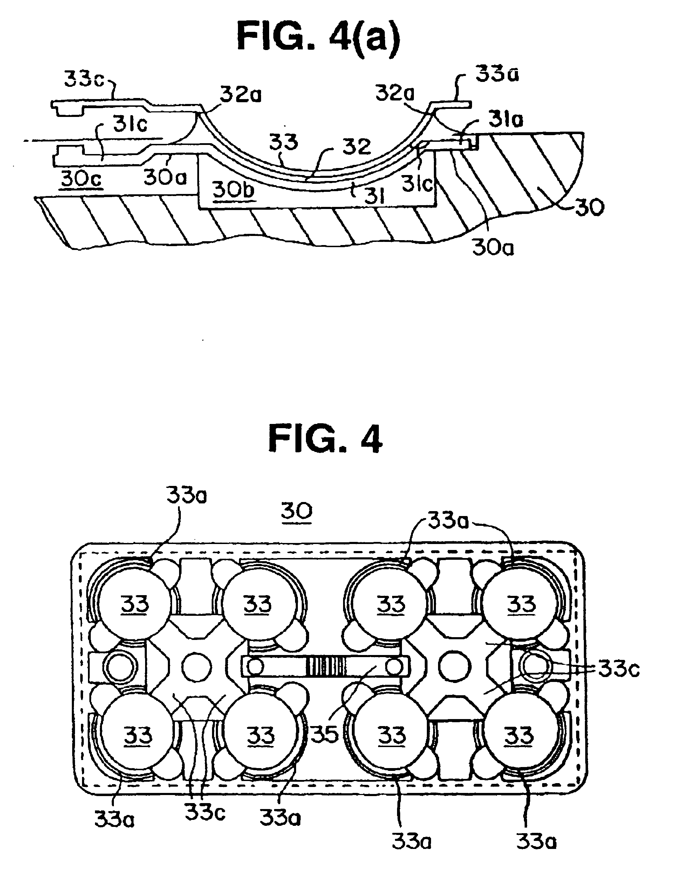

In one embodiment the process forms soft contact lenses from a polymerizable monomer or monomer mixture. The soft contact lenses are formed in a mold assembly having a first concave and a second convex mold half. As illustrated in **FIG. 4(a)****,** the mold halves, which are typically formed of a material transparent to visible and ultraviolet light (e.g., polystyrene), have a central curved section defining a concave surface 31, a convex surface 33 and circular circumferential edge 31(c), and an essentially uniplanar, annular, flange 31 (a) is connected to the edge 31 (c). At least a part of the concave surface 31 and the convex surface 33 have the dimensions of the front or back curves, respectively of a contact lens to be produced in the mold assembly, and are smooth so that the surface of the contact lens formed by polymerization of said polymerizable composition in contact with the surface is optically acceptable. The mold is thin enough to transmit heat therethrough rapidly and has rigidity sufficient to withstand prying forces applied to separate the mold halves during a demolding step which typically occurs after the cure step in the manufacturing process.

The concave surface 31 of the first mold half typically includes a colorant layer. Suitable colorant layers are provided using a suitable printing method, such as by ink-jet, spray, or pad printing. Many colorants that are suitably used to produce tinted lenses generally are composed of a binding polymer and pigments. Suitable mold halves containing a colorant layer are provided in United States Application Serial No. 10/027,579 ("the '579 application"), now U.S. Patent App. Pub. No. 2003/0000028, published Jan. 2, 2003 . The colorant is typically applied to uncured lens material by transfer of the colorant from a mold surface to the lens material and the latter is subsequently cured. The '579 application, discloses that colorant transfer can be carried out using a printing pad containing a colorant composition that is pressed against a molding surface of an optical mold. The colorant composition, which typically includes a solvent component, is allowed to dry to provide tinted lens molds for manufacturing tinted contact lenses.

Precuring typically involves partially curing selected areas of the polymerizable monomer or monomer mixture to a viscous gel. During precuring the mold halves are typically immobilized by the viscous gel like nature of the partially polymerized monomer gel. This precuring helps to maintain the parallel alignment of the mold halves. The gel viscosity sufficiently prevents decentration and enables unattended and unweighted heating and cure during the remainder of the cure period. The addition of this precure step reduces the number of defective lenses compared to traditional methods of manufacture.

In various embodiments, precuring is typically conducted immediately after the polymerizable composition is placed in the front curve mold half and the mold halves are assembled. Referring to **FIG. 4(a)****,** the complementary pair of first 31 and second 33 mold halves which define the shape of the final desired lens is used to mold the monomer mixture. Suitable monomer mixtures can be dissolved in a nonaqueous water displaceable diluent. After the filling or dosing step, in which the front concave mold half 31 is substantially filled with a polymerization mixture 32, the concave front mold half 31 is covered with a base mold half 33. The base mold half is then brought to rest on the circumferential edge 31 (c) of the concave front mold half to ensure that the resultant lenses are properly aligned and without distortion.

The first and second mold halves are then held together, which may follow assembly of the mold halves, during precure, or both. The mold halves typically displace surplus monomer from the mold area and the mold flanges remain aligned. When the molds are held together during the precure process, the monomer or monomer mixture is typically exposed to radiation, typically actinic radiation, preferably from a UV lamp. Typically the mold halves are held together for about 40 seconds with about 30 seconds of actinic radiation. At the completion of the precure step, the monomer or monomer mixture preferably forms a partially polymerized gel in the selected exposed areas.

Following precuring, in certain embodiments, the monomer/diluent mixture is heated and cured, such as in an UV oven, whereby polymerization of the monomer(s) is completed. Curing produces a polymer/diluent mixture in the shape of the final desired hydrogel lens. After curing (e.g., polymerization) is completed, the two halves of the mold are separated in a demolding step that typically leaves the contact lens in the first (front curve) mold half. The contact lens is subsequently removed from the front curve mold. The front and base curve mold halves are typically used for a single molding and then discarded. After the demolding step, the diluent is displaced with water to produce a hydrated lens, which when fully hydrated and buffered, will be of the final shape and size, which, in most cases, is nominally 10% larger than the original molded polymer/diluent lens.

Suitable curable lens-forming materials include copolymers based on 2-hydroxyethyl methacrylate ("HEMA") and one or more comonomers such as 2-hydroxyethyl acrylate, methyl acrylate, methyl methacrylate, vinyl pyrrolidone, N-vinyl acrylamide, hydroxypropyl methacrylate, isobutyl methacrylate, styrene, ethoxyethyl methacrylate, methoxy triethyleneglycol methacylate, glycidyl methacrylate, diacetone acrylamide, vinyl acetate, acrylamide, hydroxytrimethylene acrylate, methoxyethyl methacrylate, acrylic acid, methacryl acid, glyceryl methacrylate, and dimethylamino ethyl acrylate. Preferred curable lens-forming materials include polymerizable compositions, such as disclosed in U.S. Pat. No. 4,495,313 to Larsen, U.S. Pat. No. 5,039,459 to Larsen *et al.* and U.S. Pat. No. 4,680,336 to Larsen *et al.*. Suitable compositions typically comprise anhydrous mixtures of a polymerizable hydrophilic hydroxy ester of acrylic acid or methacrylic acid and a polyhydric alcohol, and a water displaceable ester of boric acid and a polyhydroxyl compound having preferably at least 3 hydroxyl groups. Polymerization of suitable compositions, followed by displacement of a boric acid ester with water, yields a hydrophilic contact lens. The mold assembly of the present invention described herein may be used to make hydrophobic or rigid contact lenses, and the manufacture of hydrophilic lenses is preferred.

Suitable lens-forming materials preferably contain a small amount of a cross-linking agent, usually from about 0.05 to about 2 % and most frequently from about 0.05 to about 1.0 %, of a diester or triester. Examples of representative cross linking agents include: ethylene glycol diacrylate, ethylene glycol dimethacrylate, 1,2-butylene dimethacrylate, 1,3-butylene dimethacrylate, 1,4-butylene dimethacrylate, propylene glycol diacrylate, propylene glycol dimethacrylate, diethylglycol dimethacrylate, dipropylene glycol dimethacrylate, diethylene glycol diacrylate, dipropylene glycol diacrylate, glycerine trimethacrylate, trimethylol propane triacrylate, trimethylol propane trimethacrylate, and the like. Typical cross-linking agents usually, but not necessarily, have at least two ethylenically unsaturated double bonds.

Suitable curable lens-forming materials generally also include a catalyst, usually from about 0.05 to about 1 % of a free radical catalyst. Typical examples of such catalysts include lauroyl peroxide, benzoyl peroxide, isopropyl percarbonate, azobisisobutyronitrile and known redox systems such as the ammonium persulfate-sodium metabisulfite combination and the like. Irradiation by ultraviolet light, electron beam or a radioactive source may also be employed to catalyze the polymerization reaction, optionally with the addition of a polymerization initiator. Representative initiators include camphorquinone, ethyl-4-(N,N-dimethylamino)benzoate, and 4-(2-hydroxyethoxy)phenyl-2-hydroxyl-2-propyl ketone.

Curing, e.g., polymerization, of the curable lens-forming materials in the mold assembly is preferably carried out by exposing the composition to polymerization initiating conditions. The preferred technique includes photoactive initiators in the composition and exposes the composition to ultraviolet or visible radiation of an intensity and duration effective that initiate and polymerize the lens-forming material. For this reason, the mold halves are preferably transparent to ultraviolet or visible radiation. After the precure step, the monomer is again exposed to ultraviolet or visible radiation in a cure step in which the polymerization is permitted to proceed to completion. The duration of the remainder of the reaction can readily be ascertained experimentally for any composition.

After the curable lens-forming material has cured (e.g., the polymerizable composition has polymerized), the mold assembly is disassembled to permit processing of the polymerized hydrogel into a contact lens (such processing includes, for example, washing and hydrating, and packaging of the lens). Preferably, the flanges of the front and back curve mold halves are gripped and pulled away from each other, either in directly opposite directions or through an angle in a prying sort of motion. Advantageously, the back curve is first heated moderately to facilitate separation of the polymerized article.

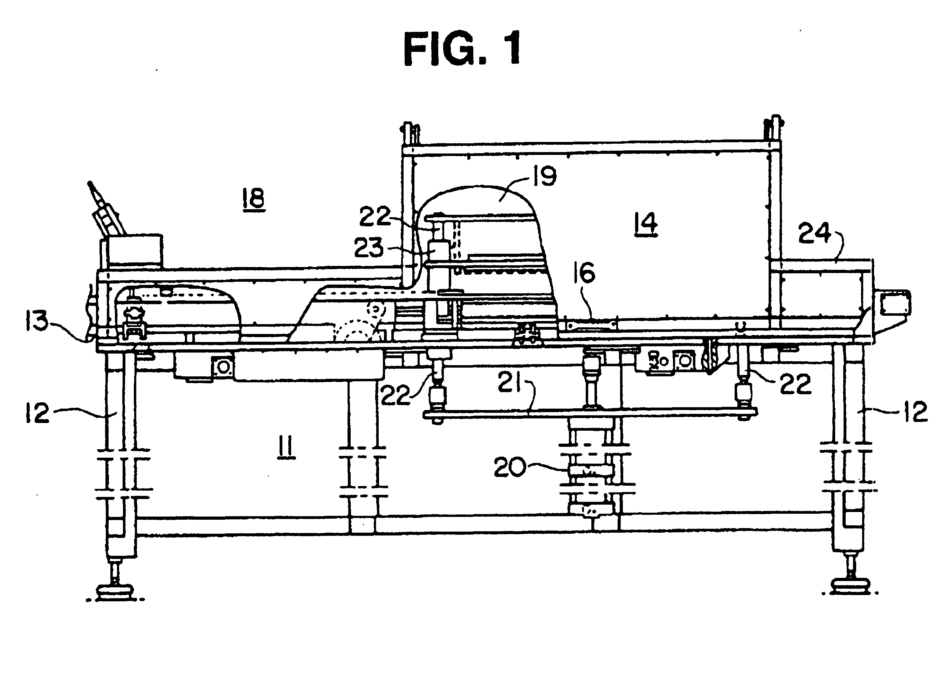

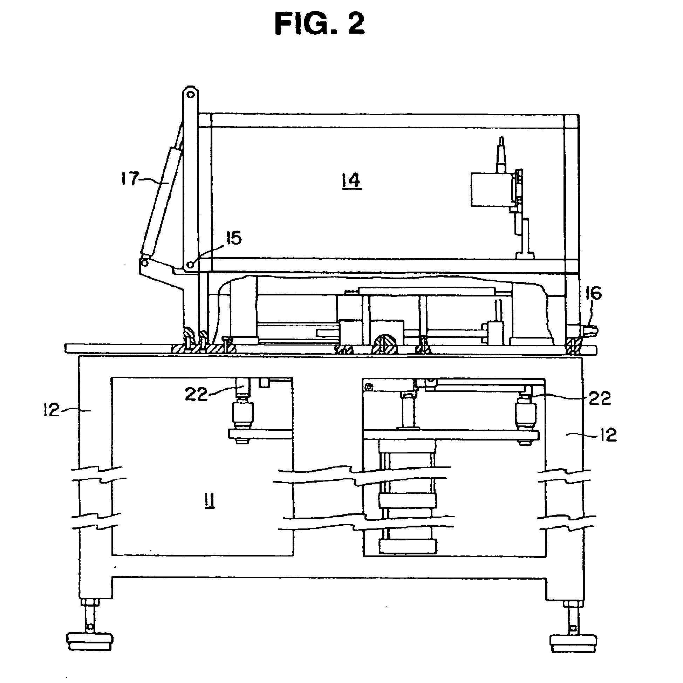

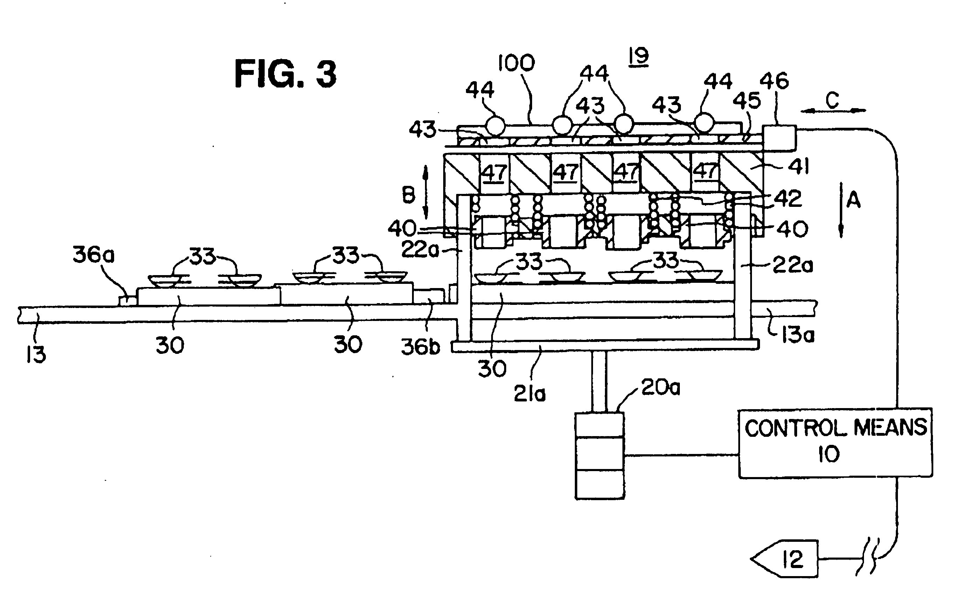

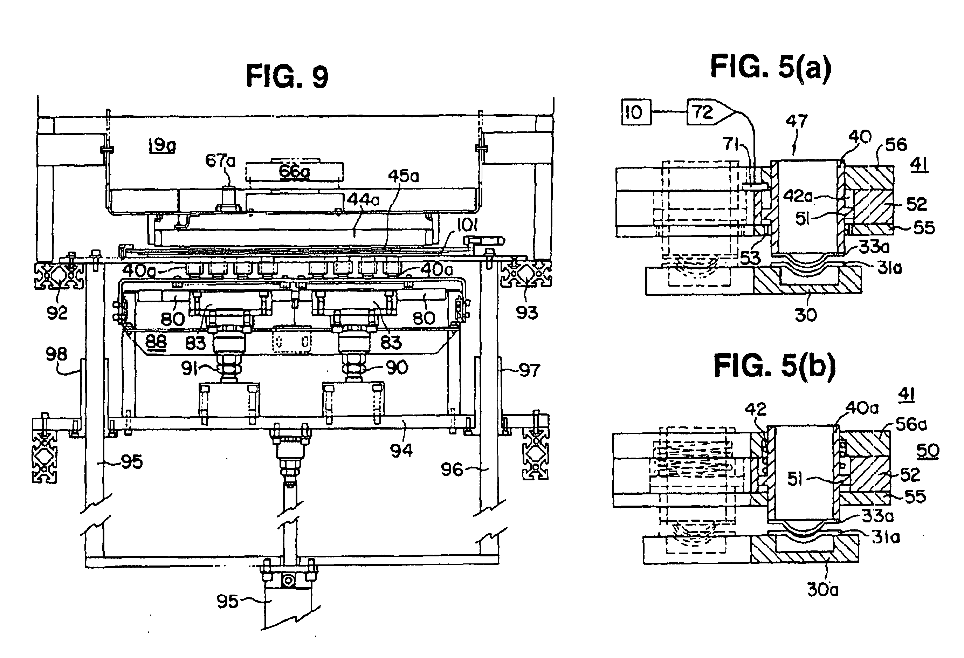

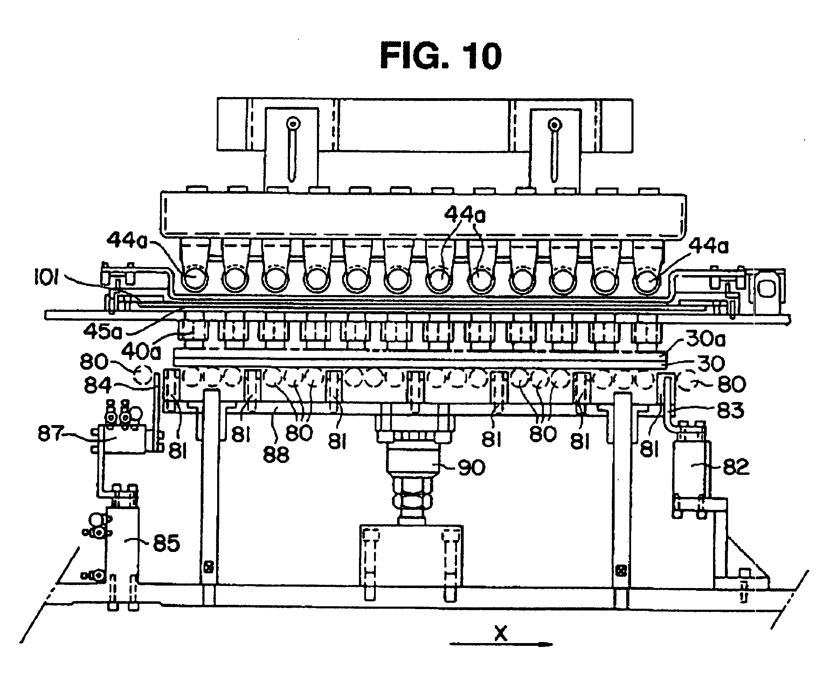

**FIG.1** and **FIG. 2** represent a side elevational view and an end elevational view, respectively, of one embodiment of a system for practicing the present invention. As illustrated in **FIGS. 1** and **2****,** a support frame 11 having legs 12 provides support for the device at an elevation of an infeed conveyor 13. As shown in **FIG. 3****,** the precure apparatus receives a plurality of pallets 30, one of which is illustrated in **FIG. 4****,** having a plurality of contact lens molds therein, from the infeed conveyor 13. As seen in **FIG. 3****,** the infeed conveyor 13 delivers the pallets 30 and molds 31, 33 to an accumulating section generally indicated 18 that gathers a plurality of pallets for the precure step. In the embodiment illustrated in **FIGS. 1-2** and **6-8,** three pallets of the type illustrated in **FIG. 4** are accumulated for a total of 24 molds in each batch operation. In the embodiment illustrated in FIGS. 9 and 10 a total of three pallets having 24 contact lens molds thereon are batched for each precure operation.

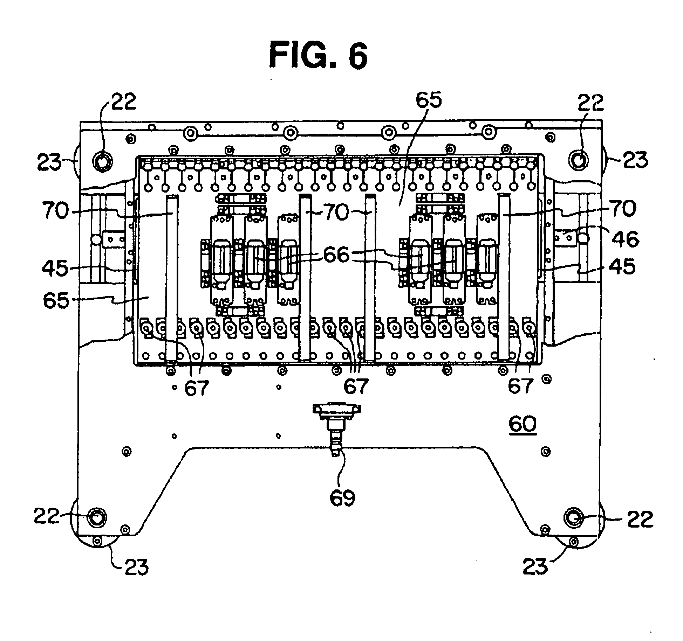

In one embodiment, a suitable precure assembly 19 is partially visible in the breakaway portion of **FIG. 1****,** and is further described with respect to **FIGS. 6-8****.** The precure assembly is raised and lowered into engagement with pallets containing contact lens molds by virtue of a pneumatic cylinder 20 which raises and lowers an intermediate support beam 21 and reciprocating shaft members 22 which are joumaled for reciprocating support in member 23 as will be hereinafter subsequently described in greater detail. After precuring, the pallets with contact lens molds therein are transported to a heated area where no actinic radiation is present and then transported to an area for subsequent cure by heat and radiation.

In certain embodiments, a plurality of pallets as illustrated in **FIGS. 4** and **4a** have a plurality of cavities for receiving a plurality of contact lens molds. As illustrated in **FIG. 4a****,** the contact lenses can be formed by placing an amount of polymerizable composition, generally on the order of about 60-100 micro liters, in the first or concave mold half 31. The desired amount depends on the dimensions (e.g., the diameter and thickness) of the desired lens, the amount of diluent, if any, and the exchange of water for polymerization by-products, if any. A second or convex mold half 33 is placed onto the polymerizable composition 32 with the first and second mold halves aligned so that their axes of rotation are collinear and the respective flanges 31 (a), 33(a) are parallel. The mold halves 31 are carried in an annular recess 30(a) that receives and supports the annular flange 31 (a) of the first or concave mold half. The pallet 30 also has a plurality of recesses 30(b) for receiving the concave portion of the mold. The pallet also carries a plurality of oriented recesses 30(c) which receive a triangular tab portion 31 (c) of the base mold half to provide a predefined angular position. The second or convex mold half 33 also includes a triangular tab 33(c) which overlies tab 31(c) to provide a collinear axis of rotation with respect to the two mold halves. The pallet 30 illustrated in FIG. 4 also contains a unique bar code number or identification chip 35 for use in pallet tracking and quality control procedures. Preferred pallets include holes for blowing a heated gas, such as air or nitrogen. The heated gas is typically used to heat the lens molds during precuring.

**FIG. 3** shows a portion of the embodiment illustrated in **FIGS. 6-10** that illustrates an apparatus including a conveyor system 13 for transporting a plurality of pallets 30 into and away from the precure station. Batch mode forks 36(a), 36(b) are used to gather and move a plurality of pallets into the precure apparatus. The apparatus 19 includes multiple vertical reciprocal movements, a first one of which is in response to movement from air cylinders 20(a) and reciprocating beam 21 (a). As the precure apparatus 19 is lowered in the direction illustrated by arrow A, a plurality of annular clamping means 41 will engage the upper annular flange 33(a) of each of the mold halves contained within pallets 30. A plurality of masks 40 are mounted on and travel with a reciprocating platform 4 of the apparatus, and are resiliently mounted therein for a second reciprocal movement along the direction of arrow B illustrated in FIG. 3.

As illustrated in **FIGS. 3** and **5(a)****-(i),** the masks 40 can be biased within frame 41 by springs 42 (illustrated diagrammatically) which may be the air spring 42(a) illustrated in **FIG. 5(a)** or a helical spring 42 as illustrated in **FIG. 5b****.** As the apparatus is lowered, the masks will engage and hold the first and second mold halves together with the force determined by the spring 42. When air springs are used, the force will be determined by the amount of pressure provided to the air cylinder 42(a). While masks 40 have been illustrated as four members in **FIG. 3** for illustrative purposes, it is understood that in the embodiments illustrated in **FIGS. 6-10** that there can be about 96 individual masks, with an individual mask for each of the mold halves.

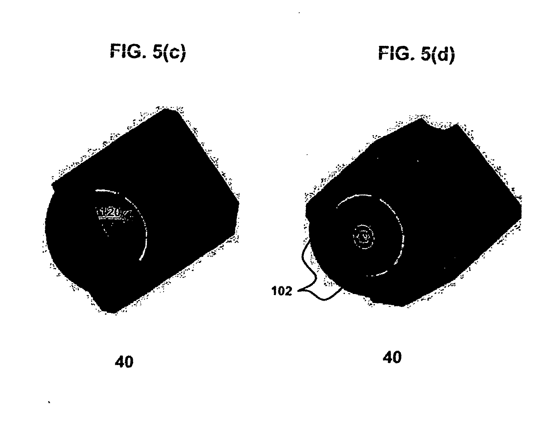

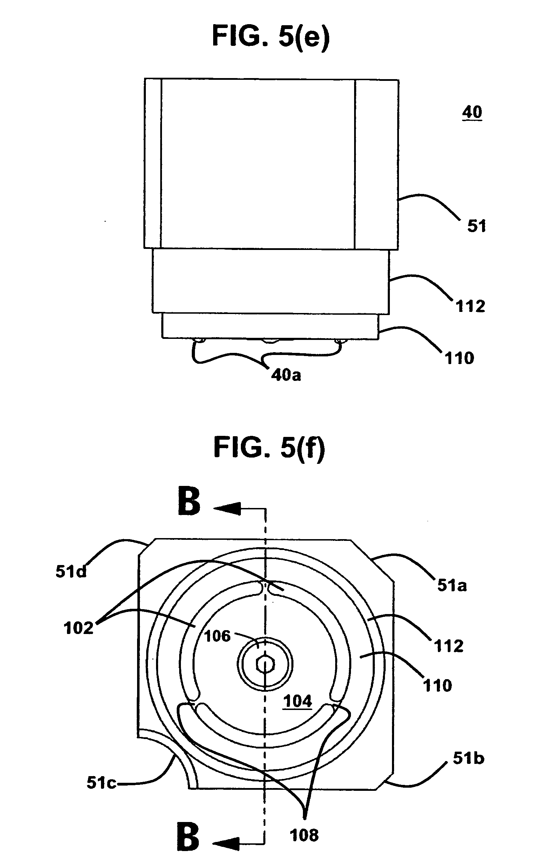

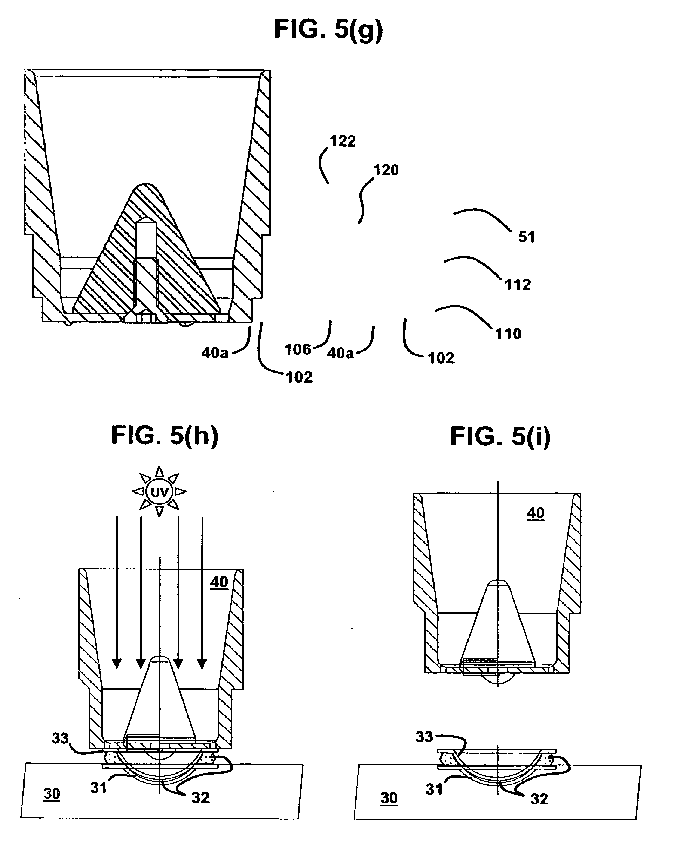

**FIGs. 5(c)** and **5(d)** are, respectively, top and bottom perspective views of one embodiment of a mask 40 including a cone that can be used in the present invention. The mask as illustrated includes a cone 120 for directing radiation (not shown) through a plurality of openings 102. **FIG. 5(e)** is an elevational view of the mask 40 illustrated in **FIG. 5(c)** that illustrates placement of the flange member 51, engagement members 40(a), mask outer ring 110 and outer ring - flange extension 112. A bottom view of the mask illustrated in **FIG. 5(e)** is provided in **FIG. 5(f)****.** This view further illustrates placement of plurality of openings 102 azimuthally around the perimeter of the mask bottom plane 104. The mask bottom plane 104 is secured to the mask outer ring 110 by way of holding segments 108. In this embodiment, three holding segments 108 separate the plurality of openings 102. A holding screw 106 is provided to attach an optional cone 120 (not shown). **FIG. 5(g)** is a sectional view along line B-B of the mask 40 illustrated in **FIG. 5(f)****.** Illustrated in further detail is the placement of the optional cone 120, having a cone tip 122, that is secured to the mask bottom plane 104 using a holding screw 106. Engagement members 40(a) are placed at the bottom of the mask. Radiation (not shown) is directed down into the mask, reflected off the surface of the cone 120 and directed through opening 102.

The masks are typically formed of a metal, preferably a heavy metal such as stainless steel or tungsten, or a metal containing composite. Optionally, the mass of the mask may be increased to enable the mask to be held in position (i.e., clamped) by weight alone, without air or spring assist. However, the combination of the mask 40 and locally driven resilient biasing device enables precise control of the amount of holding pressure exerted on the plastic flanges 33(a) of the upper mold without regard to the amount of force needed to move the mass of the entire precure assembly 19. Formed on the engaging annulus of mask 40 are a plurality of engagement members 40(a)-(c) which minimize the surface area of engagement between the mask and the mold halves. These engagement members are integrally formed from the annular cylinder as downwardly extending square tooth members, by cutting away portions of the annular member. In the embodiments illustrated in **FIGS. 5(c) - 5(i)** the flange member 51 is squarish, with beveled portions 51(a)-(d).

In certain embodiments of the present invention, the mask can comprise an optional reflector, such as a cone. In these embodiments, the base area of the cone is up to the size of the area of the mask bottom plane, although smaller area cone base areas are possible. The cone height is typically about the same as the diameter of the cone base, although the cone height can be smaller or larger. Typically the tip of the cone or suitable reflector resides within the entirety of the mask, although it is envisioned that the cone tip may extend out of the mask. Although cones having round bases are typically used, other base shapes (e.g., triangular, quadrilateral, pentagonal, hexagonal and other polygonal shapes) are suitably envisioned to function as a reflector.

Suitable reflectors are typically positioned adjacent to the mask, such as being sealed to the mask using a suitable mechanical device, such as by a screw, rivet, adhesion, welding, tongue and groove coupling or other mechanical interlocking device. The reflector may also be a piece, such as cone, that sits in a depression in the mask. Suitable masks may include integral reflectors that can be fabricated from a solid metal or composite piece, such as by metal machining or metal injection molding.

The reflector typically has a surface suitable for reflecting the radiation used to initiate, cure, or both, the lens-forming material. Suitable reflective surfaces include polished metal, such as a polished or coated metal, Such as 300 series stainless steel or a metal plating such as nickel plating. In one embodiment, the mask is formed from a suitable machinable dense metal, such as tungsten plated with titanium nitride, and the reflector is a cone constructed from 300 series stainless steel. The cone-shaped reflector is typically held to the mask using a screw.

In other embodiments, a reflector can be provided that is not adjacent to the mask bottom plane. In these embodiments, the mask can be held by a support attached to an interior portion of the mask, such as adjacent to the flange or outer ring- flange extension. Alternately, the reflector can be supported above the mask, for example by use of a metal support located between the radiation source and the mask.

In certain embodiments the mask is substantially a flat disk, such as a mask bottom plane as described above in **FIGs. 5(c) - (i).** The mask may be circular although other polygonal shaped masks can be used. Preferably, the masks include a substantially flat disk adjacent to three arc-like openings to form the unmasked areas for passing radiation therethrough. Typically the area of the openings is less than about 25% the area, and more typically less than about 10% the area, of the masked area.

The positional relationship between a mask and a contact lens mold assembly in one embodiment of the present invention is illustrated in **FIGs. 5(h)** and **5(i)****.** The mask 40 is shown holding together the assembly of first mold half 31, curable lens-forming material (polymerizable composition) 32 and second mold half 33 during exposure with UV radiation (arrows) in **FIG. 5(h)** during precuring. After precuring is completed the mask 40 is disengaged from the back curve mold lifted **(****FIG. 5(i)****)** and precured lens-forming material 32 helps to keep the mold halves together during subsequent curing.

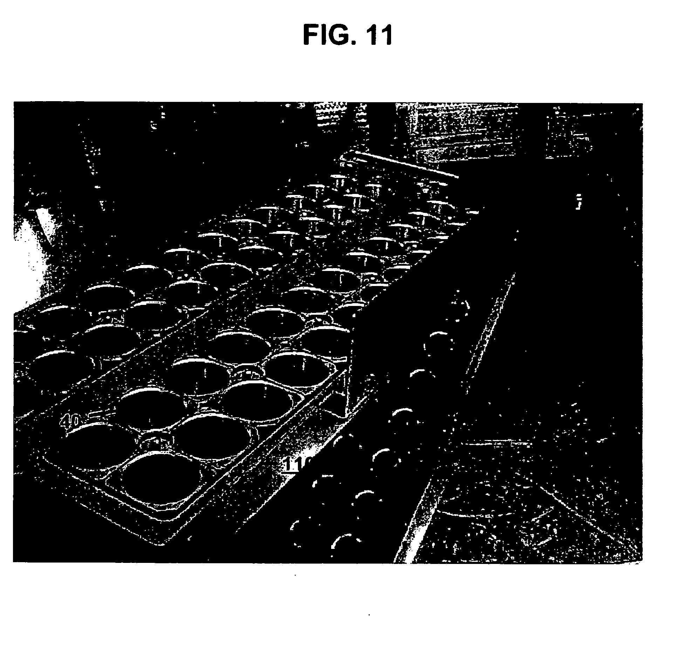

In preferred embodiments, masks of sufficient mass are lowered onto the mold assemblies and held in place using the mass of the mask under the influence of gravity. Referring to **FIG. 11****,** a plurality of masks 40 are contained in a holding tray 110 that reciprocates up and down over the plurality of mold assemblies (not shown). As the holding tray 110 moves down the plurality of masks 40 press against the mold assemblies to hold the mold halves together. A source of radiation (not shown) is typically positioned above the tray 110.

Positioned above the clamping apparatus or holding tray 110 are a plurality of actinic light sources 44 which may be UV lamps. The operation of the precure apparatus 19 preferably is set by control circuit 10 which controls the duration of the holding period by the length of time air cylinder 20(a) is activated to its reciprocal down position. A control circuit also controls the amount of radiation received by the molds by controlling the duration of the exposure period through the operation of turning the actinic light source on and off. The intensity may also be manually adjusted by raising or lowering the lamps 44 with respect to molds 31,33. Optionally, the radiation may be generated remotely and routed to the mold halves and polymerizable material via a fiber optic system, with control system 10 providing control of exposure time and energy level.

The amount of force applied by mask 40 is typically varied from about 0.25 Kgf to about 2.0 Kgf per lens and is applied to keep the flange 33(a) of the second convex mold half parallel to the flange 31 (a) of the first concave mold half for the duration of the exposure. The mask is applied for about 10 to about 60 seconds, more typically for a period of about 30 to about 50 seconds, by controller 10. After about 0 to about 20 seconds, preferably after about 5 to about 15 seconds, the unmasked portion of actinic radiation from UV lamps 44 is applied to a portion of the assembled mold and the polymerizable monomer. The intensity of the UV light source is typically about 2 to about 4 mW/cm². This intensity is applied for about 10 to about 50 seconds, preferably about 20 to about 40 seconds.

In a preferred embodiment, the radiation source includes tubular low pressure mercury vapor fluorescent UV lamps that emit a long wave ultraviolet radiation having a highly concentrated radiation between 320 and 390 nm. In one embodiment, by way of example, the lamps are manufactured by Philips as model 'TL' 29 D 16/09 N having a nominal wattage of 14 watts and an average radiation of 1.8 watts in the desired spectrum.

In various embodiments, the mold halves are typically held together for a predetermined period of time, prior to exposure to precuring radiation, to allow equilibrium to develop between the monomer and the mold cavity. This equilibration time also allows any excess monomer to be extruded out of the mold cavity into the space between flanges 31(a) and 32(a) where it forms a ring of excess monomer 33(a), which is generally referred to as a "HEMA" ring when hydroxyethylmethacrylate monomer is used. In a preferred embodiment the first or concave mold cavity includes a sharp annular edge 31 (c) to cleanly contact the convex portion of mold half 33 and thereby separate the contact lens 32 from the HEMA ring 32(a). The pre-exposure holding period (e.g., clamping period) allows for excess monomer to migrate from the mold cavity to the HEMA ring, enables the second mold cavity to seat cleanly on parting edge 31 (c), and allows an equilibrium to develop between the mold halves and the monomer. Although the mold halves may be held together until the curable lens-forming material is completely cured, in the preferred embodiment actinic radiation on the order of about 2 to about 4 mW/cm² is applied for approximately 30 seconds for precuring. Different intensities and exposure times may be used, including pulsed and cycled high intensity UV of about 10 to about 150 mW/cm² with exposure times of from about 5 to about 60 seconds. In a pulsed or cycled exposure, the actinic radiation may be cycled on for about 3 to about 10 seconds and then off for about 3 to about 10 seconds for a total of about 1 to about 10 cycles of radiation. At the end of the radiation period, the actinic radiation is turned off and the mask is removed. As the assembly 19 is lifted, the mask 40 is lifted clear of the molds and pallets to enable them to be transported out of the precure device by using conveyor 13(a). During precuring in a preferred embodiment, heated gas is blown onto the concave mold half to bring it to a predetermined temperature, preferably in the range of from about 40 to about 60°C. Typically the heated gas is blown through holes in the pallets, and preferably during the holding period so as not to expel the mold assemblies from the pallets.

At the conclusion of the precure process, selected areas of the curable lens-forming material (e.g., monomer or monomer mixture) have typically undergone initiation and some degree of polymerization. The precured portion of the lens-forming material is typically in a gel state and is primarily located around the "HEMA" ring and the perimeter of the lens mold assembly where the lens molding material has minimal thickness. The more central body of the lens assembly, being shielded from the radiation, typically remains unpolymerized such that the lens forming material may continue to diffuse into the pigmented polymeric colorant contained on the concave mold half. As the monomer polymerizes it typically forms a seal along the parting edge 31 (c), which together with the inherent shrinkage of the monomer from polymerization, forms a secure mold package that may be cured, for example, by application of heat.

In certain embodiments, the holding pressure aligns the mold flanges to provide substantially parallel alignment of the flanges. A seal arises from the precuring and functions to retain the parallel alignment after the holding pressure is released. In preferred embodiments, the holding pressure and the resulting seal maintains centration and provides a clean edge at the circumference of the lens. In other embodiments, such as illustrated in **FIG. 5(b)****,** a weighted mask 40 includes a flange 51 that is engaged by a resilient coil spring 42 and driven downwardly against stop plate 55. The other end of coil spring 42 is mounted within upper stop plate 56(a). Spacer plate 52 and the upper stop plate 56 provide support and guidance for the vertical reciprocation of mask 40.

In certain preferred embodiments, such as provided in **FIG. 4(a)****,** the engagement members 40(a)-(c) are approximately 1 mm in size, which has been found sufficient to ensure an even distribution of pressure around the knife edge 31 (c). The engagement members help minimize the attraction or migration of oil from the mold halves to the mask. While one configuration for the engagement members is illustrated in **FIG. 5(d)****,** any configuration of engagement members 40(a)-(c) would work. The engagement members are typically distributed in a radially uniform manner about the circular knife edge 31(c). Nonuniform distribution of the holding pressure may result in tipping of the upper or back curve mold half with respect to the lower or front curve mold half.

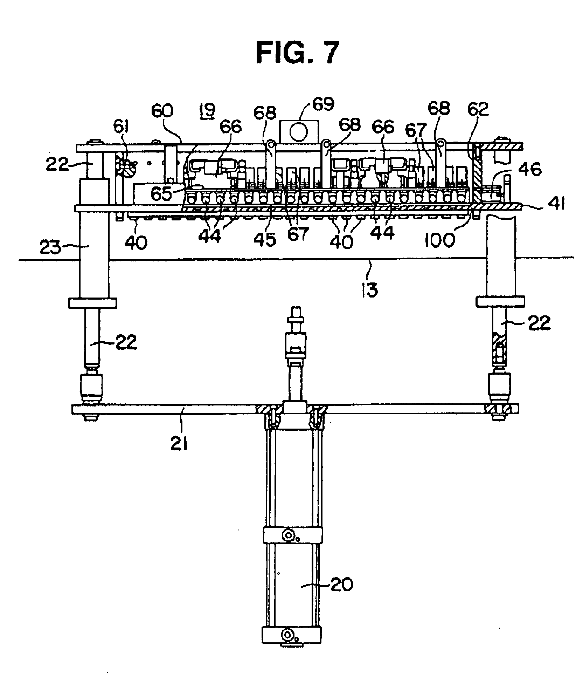

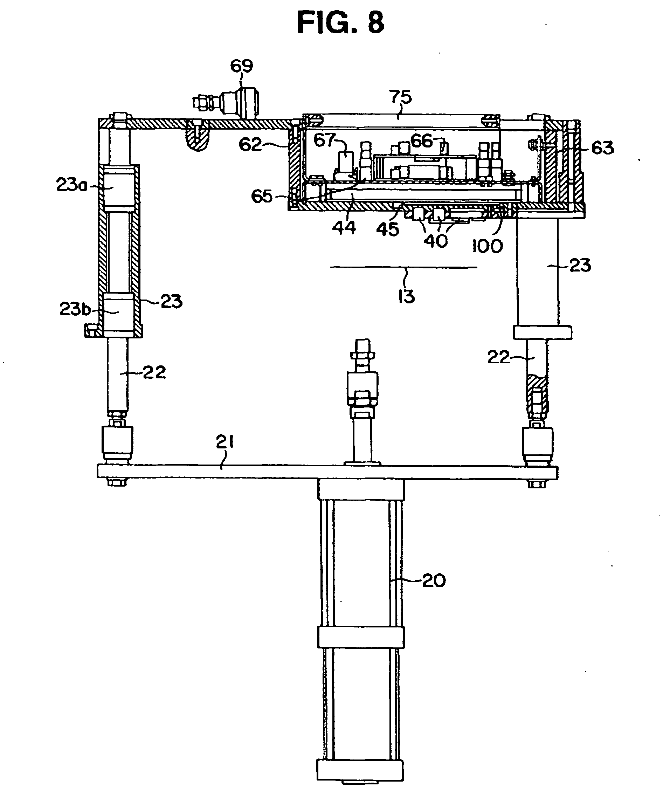

**FIGS. 6-8** are top side and end elevational views of one embodiment of the apparatus for performing the present invention. As illustrated in **FIGS. 6-8****,** the precure assembly 19 is mounted on reciprocating support shafts 22 which are journaled for reciprocating motion within support members 23 which are fixably mounted to a frame. Each of the support members 23 include upper and lower bearings or journals 23(a), 23(b) to provide for precision guidance of the reciprocating shafts 22. Shafts 22 are driven by intermediate support frame 21 which is in turn driven by air cylinder 20 as previously described. The precure assembly 19 is reciprocated vertically with respect to the upper most surface of the conveyor 13 illustrated schematically in **FIGS. 7** and **8****.** The precure assembly 19 is supported from an upper support frame 60 from which various operating components are suspended by intermediate support members at each corner generally illustrated at 61, 62 in **FIG. 7** an 62, 63 in **FIG. 8****.** These members suspend the reciprocating platform 41, into which the mask 40 are fitted for a secondary reciprocating along the same axis. A separate subframe 65 is mounted on platform 41 and provides support for the ultraviolet lamps 44 and the ballast members 66 which provide the high voltage for the UV lamps, and the starters 67 which are used to initiate fluorescence. In one embodiment, by way of example, the ballast members may be BTP 30C05S, as manufactured by Philips and the starters may be model S2, as manufactured by Philips. The intermediate support frame 65 may be lifted free from the reciprocating platform 41 by using a plurality of handles 67 which are mounted via straps 68 to the intermediate support frame 65.

Methods, materials and devices for preparing tinted contact lenses have been provided. While the present invention has been described in connection with the exemplary embodiments of the various figures and examples, it is to be understood that other similar embodiments may be used or modifications and additions may be made to the described embodiment for performing the same function of the present invention without deviating therefrom. For example, one skilled in the art will recognize that the methods of the present invention as described in the present application may include, for example, additional processing steps. Likewise, the masks as described in the present application may include, for example, any type of design of plurality of openings to achieve precuring of a portion of the curable lens-forming material. Therefore, the present invention should not be limited to any single embodiment, but rather should be construed in breadth and scope in accordance with the appended claims.

## Claims

1. A method, comprising:
providing a contact lens mold assembly that comprises:
a first contact lens mold half;
a second contact lens mold half positioned proximately to said first contact lens mold half, at least one of the first and second contact lens mold halves comprising a color layer; and
a curable lens-forming material positioned between the first and second contact lens mold halves, said curable lens-forming material in contact with at least one of the contact lens mold halves and said color layer;
curing at least a portion of the curable lens-forming material in contact with at least one of the contact lens mold halves, the portion of the curable lens-forming material in contact with said color layer remaining substantially uncured.

2. The method of claim 1 comprising the step of heating the color layer, the first mold half, the second mold half, the curable lens-forming material, or any combination thereof.

3. The method of claim 2, wherein said heating increases the temperature of at least one of the color layer, the first mold half, the second mold half, or the curable lens-forming material, by about 5°C to about 50°C.

4. The method of claim 1 wherein said curing is effected by irradiating at least a portion of the curable lens-forming material in contact with said first contact lens mold with ultraviolet radiation.

5. The method of claim 4, wherein said ultraviolet radiation is selected using a mask, said mask optically located between a source providing said ultraviolet radiation and said first contact lens mold.

6. The method of claim 5, wherein at least a portion of the ultraviolet radiation is reflected by a reflector, said reflector optically located between a source providing said ultraviolet radiation and said first contact lens mold.

7. The method of claim 6. wherein said reflector is adjacent to said mask.

8. The method of claim 5, wherein said mask comprises a plurality of openings.

9. The method of claim 8, wherein said plurality of openings include slits, holes, or any combination thereof.

10. The method of claim 8, wherein said plurality of openings are azimuthally arranged.

11. The method of claim 5, wherein said mask holds the contact lens mold halves together.

12. The method of claim 11, wherein said mask comprises mass sufficient under the influence of gravity or acceleration to exert said pressure.

13. The method of claim 11, wherein said mask presses said second contact lens mold half into said monomer mixture.

14. The method of claim 1, wherein said curing takes place in an air environment, a low oxygen environment, an inert environment, or any combination thereof.

15. The method of claim 1, wherein at least one of the first and second lens mold halves comprises a molding surface and a clear layer in contact with said molding surface.

16. The method of claim 15, wherein said clear layer contacts said curable lens-forming material.

17. The method of claim 15, wherein said color layer contacts said clear layer.

18. The method of claim 17, wherein the clear layer contacts one of the lens mold halves.

19. The method of claim 1, wherein the viscosity of the curable lens-forming material in contact with said color layer remains essentially the same or decreases as the curable lens-forming material in contact with at least one of the mold halves precures.

20. The method of claim 1, wherein the viscosity of the curable lens-forming material in contact with said optical surface increases during curing.

21. A system, comprising:
a contact lens mold assembly, comprising:
a first contact lens mold half;
a second contact lens mold half positioned proximately to said first contact lens mold half, at least one of the first and second contact lens mold halves comprising a color layer; and **characterized by**
a mask positioned proximately to at least one of the mold halves, said mask comprising a plurality of openings capable of passing radiation therethrough, said plurality of openings positioned to irradiate at least a portion of a curable lens-forming material in contact with at least one of the mold halves; and
a radiation source for-providing radiation capable of curing said curable lens-forming material.

22. The system of claim 21, wherein the at least one of the first and second contact lens mold halves that comprises the color layer comprises a clear layer positioned between the contact lens mold half and the color layer.

23. The system of claim 21, wherein said mask is positioned adjacent to at least one of the mold halves

24. The system of claim 23, wherein said plurality of openings comprises slits, holes, or any combination thereof.

25. The system of claim 24, wherein said plurality of openings are azimuthally arranged.

26. The system of claim 21, wherein said mask comprises a radiation reflector.

27. The system of claim 26, wherein said radiation reflector comprises a cone shape.

28. The system of claim 21, wherein said mask comprises mass sufficient under the influence of gravity or acceleration to exert pressure between said mold halves.

29. The system of claim 21, comprising a heater for heating the color layer, the first mold half, the second mold half, the curable lens-forming material, or any combination thereof.

30. The system of claim 29, wherein the heater is capable of increasing the temperature of at least one of the color layer, the first mold half, the second mold half, or the curable lens-forming material, by an amount of from about 5°C to about 50°C.

31. The system of claim 21, comprising a plurality of contact lens mold assemblies.

## Patentansprüche

1. Verfahren, das aufweist:
Bereitstellen einer Kontaktlinsen-Formanordnung, die aufweist:
eine erste Kontaktlinsen-Formhälfte;
eine zweite Kontaktlinsen-Formhälfte, die nahe der ersten Kontaktlinsen-Formhälfte angeordnet ist, wobei wenigstens eine, die erste oder die zweite Kontaktlinsen-Formhälfte, eine Farbschicht aufweist; und
ein härtbares, Linsen bildendes Material, das zwischen der ersten und der zweiten Kontaktlinsen-Formhälfte angeordnet ist, wobei das härtbare, Linsen bildende Material in Kontakt mit wenigstens einem, den Kontaktlinsen-Formhälften der der Farbschicht, ist;
Härten wenigstens eines Teiles des härtbaren, Linsen bildenden Materials in Kontakt mit wenigstens einer der Kontaktlinsen-Formhälfte, wobei der Teil des härtbaren, Linsen bildenden Materials in Kontakt mit der Farbschicht im wesentlichen ungehärtet bleibt.

2. Verfahren nach Anspruch 1, mit dem Schritt des Erwärmens der Farbschicht, der ersten Formhälfte, der zweiten Formhälfte, dem härtbaren, Linsen bildenden Material oder irgendeiner Kombination aus diesen.

3. Verfahren nach Anspruch 2, bei dem das Erwärmen die Temperatur wenigstens eines aus der Farbschicht, der ersten Formhälfte, der zweiten Formhälfte oder dem härtbaren, Linsen bildenden Material, um ungefähr 5°C bis ungefähr 50°C erhöht.

4. Verfahren nach Anspruch 1, bei dem das Härten bewirkt wird, indem wenigstens ein Teil des härtbaren, Linsen bildenden Materials in Kontakt mit der ersten Kontaktlinsen-Form mit ultravioletter Strahlung bestrahlt wird.

5. Verfahren nach Anspruch 4, bei dem die ultraviolette Strahlung ausgewählt wird, indem eine Maske verwendet wird, wobei die Maske optisch zwischen einer Quelle, die die ultraviolette Strahlung liefert, und der ersten Kontaktlinsen-Form angeordnet ist.

6. Verfahren nach Anspruch 5, bei dem wenigstens ein Teil der ultravioletten Strahlung von einem Reflektor reflektiert wird, wobei sich der Reflektor optisch zwischen einer Quelle, die die ultraviolette Strahlung liefert, und der ersten Kontaktlinsen-Form befindet.

7. Verfahren nach Anspruch 6, bei dem der Reflektor benachbart der Maske ist.

8. Verfahren nach Anspruch 5, bei dem die Maske eine Vielzahl von Öffnungen aufweist.

9. Verfahren nach Anspruch 8, bei dem die Vielzahl der Öffnungen Schlitze, Löcher oder irgendeine Kombination aus diesen umfaßt.

10. Verfahren nach Anspruch 8, bei dem die Vielzahl der Öffnungen azimutal angeordnet ist.

11. Verfahren nach Anspruch 5, bei dem die Maske die Kontaktlinsen-Formhälften zusammenhält.

12. Verfahren nach Anspruch 11, bei dem die Maske eine Masse aufweist, die unter dem Einfluß der Schwerkraft oder von Beschleunigung ausreichend ist, den Druck auszuüben.

13. Verfahren nach Anspruch 11, bei dem die Maske die zweite Kontaktlinsen-Formhälfte in die Monomermischung drückt.

14. Verfahren nach Anspruch 1, bei dem das Härten in einer Luftumgebung, einer Umgebung mit wenig Sauerstoff, einer inerten Umgebung oder einer Kombination aus diesen stattfindet.

15. Verfahren nach Anspruch 1, bei dem wenigstens ein, die erste oder die zweite Linsen-Formhälfte, eine Formfläche und eine klare Schicht in Kontakt mit der Formfläche auf weist.

16. Verfahren nach Anspruch 15, bei dem die klare Schicht das härtbare, Linsen bildende Material berührt.

17. Verfahren nach Anspruch 15, bei dem die Farbschicht die klare Schicht berührt.

18. Verfahren nach Anspruch 17, bei dem die klare Schicht eine der Linsen-Formhälften berührt.

19. Verfahren nach Anspruch 1, bei dem die Viskosität des härtbaren, Linsen bildenden Materials in Kontakt mit der Farbschicht im wesentlichen dieselbe bleibt oder abnimmt, wenn das härtbare, Linsen bildende Material in Kontakt mit wenigstens einer der Formhälften vorhärtet.

20. Verfahren nach Anspruch 1, bei dem die Viskosität des härtbaren, Linsen bildenden Materials in Kontakt mit der optischen Fläche während des Härtens ansteigt.

21. System, das aufweist:
eine Kontaktlinsen-Formanordnung, die aufweist:
eine erste Kontaktlinsen-Formhälfte;
eine zweite Kontaktlinsen-Formhälfte, die nahe der ersten Kontaktlinsen-Formhälfte angeordnet ist, wobei wenigstens eine, die erste oder die zweite Kontaktlinsen-Formhälfte, eine Farbschicht aufweist; und **gekennzeichnet ist durch**
eine Maske, die nahe wenigstens einer der Formhälften angeordnet ist, wobei die Maske eine Vielzahl von Öffnungen aufweist, die Strahlung durchlassen können, wobei die Vielzahl der Öffnungen so angeordnet ist, daß wenigstens ein Teil eines härtbaren, Linsen bildenden Materials in Kontakt mit wenigstens einer der Formhälften bestrahlt wird; und
eine Strahlungsquelle zum Liefern von Strahlung, die in der Lage ist, das härtbare, Linsen bildende Material zu härten.

22. System nach Anspruch 21, bei dem die wenigstens eine, die erste oder die zweite Kontaktlinsen-Formhälfte, die die Farbschicht aufweist, eine klare Schicht aufweist, die zwischen der Kontaktlinsen-Formhälfte und der Farbschicht angeordnet ist.

23. System nach Anspruch 21, bei dem die Maske benachbart wenigstens einer der Formhälften angeordnet ist.

24. System nach Anspruch 23, bei dem die Vielzahl der Öffnungen Schlitze, Löcher oder irgendeine Kombination aus diesen aufweist.

25. System nach Anspruch 24, bei dem die Vielzahl der Öffnungen azimutal angeordnet ist.

26. System nach Anspruch 21, bei dem die Maske einen Strahlungsreflektor aufweist.

27. System nach Anspruch 26, bei dem der Strahlungsreflektor eine konische Form aufweist.

28. System nach Anspruch 21, bei dem die Maske eine Masse aufweist, die unter dem Einfluß der Schwerkraft oder von Beschleunigung ausreichend ist, einen Druck zwischen den Formhälften auszuüben.

29. System nach Anspruch 21, weiter mit einer Heizeinrichtung zum Heizen der Farbschicht, der ersten Formhälfte, der zweiten Formhälfte, des härtbaren, Linsen bildenden Materials oder irgendeiner Kombination aus diesen.

30. System nach Anspruch 29, bei dem die Heizeinrichtung in der Lage ist, die Temperatur wenigstens einer aus der Farbschicht, der ersten Formhälfte, der zweiten Formhälfte oder dem härtbaren, Linsen bildenden Material, um einen Betrag von ungefähr 5°C bis ungefähr 50°C zu erhöhen.

31. System nach Anspruch 21, das eine Vielzahl von Kontaktlinsen-Formanordnungen auf weist.

## Revendications

1. Procédé comprenant :
◆ la fourniture d'un assemblage de moule de lentille de contact qui comprend :
◆ une première moitié de moule de lentille de contact ;
◆ une seconde moitié de moule de lentille de contact placée à proximité de la première moitié de moule de lentille de contact, au moins une des première et seconde moitiés de moule de lentille de contact comprenant une couche de couleur ; et
◆ un matériau de formation de lentille durcissable placé entre les première et seconde moitiés de moule de lentille de contact, ledit matériau de formation de lentille durcissable étant en contact avec au moins une des moitiés de moule de lentille de contact et ladite couche de couleur ;
le durcissement d'au moins une partie du matériau de formation de lentille durcissable en contact avec au moins une des moitiés de moule de lentille de contact, la partie du matériau de formation de lentille durcissable étant en contact avec ladite couche de couleur restant sensiblement non durcie.

2. Procédé selon la revendication 1 comprenant l'étape de chauffage de la couche de couleur, de la première moitié de moule, de la seconde moitié de moule, du matériau de formation de lentille de contact durcissable, ou de toute combinaison de ceux-ci.

3. Procédé selon la revendication 2, dans lequel ledit chauffage augmente la température d'au moins une des couches de couleur, de la première moitié de moule, de la seconde moitié de moule, ou du matériau de formation de lentille durcissable, d'environ 5°C à 50°C.

4. Procédé selon la revendication 1, dans lequel ledit durcissement est réalisé par irradiation d'au moins une partie du matériau de formation de lentille durcissable en contact avec ledit premier moule de lentille de contact par rayonnement ultraviolet.

5. Procédé selon la revendication 4, dans lequel ledit rayonnement ultraviolet est choisi en utilisant un masque, ledit masque étant placé optiquement entre une source fournissant ledit rayonnement ultraviolet et ledit-premier moule de lentille de contact.

6. Procédé selon la revendication 5, dans lequel au moins une partie du rayonnement ultraviolet est réfléchie par un réflecteur, ledit réflecteur étant placé optiquement entre une source fournissant ledit rayonnement ultraviolet et ledit premier moule de lentille de contact.

7. Procédé selon la revendication 6, dans lequel ledit réflecteur est adjacent audit masque.

8. Procédé selon la revendication 5, dans lequel ledit masque comprend une pluralité d'ouvertures.

9. Procédé selon la revendication 8, dans lequel ladite pluralité d'ouvertures comprend des fentes, des orifices, ou toute combinaison de ceux-ci.

10. Procédé selon la revendication 8, dans lequel ladite pluralité d'ouvertures est agencée de façon azimutale.

11. Procédé selon la revendication 5, dans lequel ledit masque maintient les moitiés de moule de lentille de contact ensemble.

12. Procédé selon la revendication 11, dans lequel ledit masque comprend une masse suffisante sous l'influence de la gravité ou de l'accélération pour exercer ladite pression.

13. Procédé selon la revendication 11, dans lequel ledit masque presse ladite seconde moitié de moule de lentille de contact dans ledit mélange monomère.

14. Procédé selon la revendication 1, dans lequel ledit durcissement est réalisé dans un environnement d'air, un environnement à faible teneur en oxygène, un environnement inerte, ou toute combinaison de ceux-ci.

15. Procédé selon la revendication 1, dans lequel au moins une des première et seconde moitiés de moule de lentille comprend une surface de moulage et une couche claire en contact avec ladite surface de moulage.

16. Procédé selon la revendication 15, dans lequel ladite couche claire est en contact avec ledit matériau de formation de lentille durcissable.

17. Procédé selon la revendication 15, dans lequel ladite couche de couleur est en contact avec ladite couche claire.

18. Procédé selon la revendication 17, dans lequel ladite couche claire est en contact avec une des moitiés du moule de lentille.

19. Procédé selon la revendication 1, dans lequel la viscosité du matériau de formation de lentille durcissable en contact avec ladite couche de couleur demeure essentiellement la même ou diminue lorsque le matériau de formation de lentille durcissable en contact avec au moins une des moitiés du moule prédurcit.

20. Procédé selon la revendication 1, dans lequel la viscosité du matériau de formation de lentille durcissable en contact avec ladite surface optique augmente au cours du durcissement.

21. Système, comprenant :
◆ un assemblage de moule de lentille de contact, comprenant :
◆ une première moitié de moule de lentille de contact ;
◆ une seconde moitié de moule de lentille de contact placée à proximité de ladite première moitié de moule de lentille de contact, au moins une des première et seconde moitiés de moule de lentille de contact comprenant une couche de couleur ; et **caractérisé par**
◆ un masque placé à proximité d'au moins une des moitiés de moule, ledit masque comprenant une pluralité d'ouvertures permettant le passage du rayonnement à travers celles-ci, ladite pluralité des ouvertures étant placée de façon à irradier au moins une partie d'un matériau de formation de lentille durcissable en contact avec au moins une des moitiés du moule ; et
◆ une source de rayonnement pour fournir le rayonnement permettant de durcir ledit matériau de formation de lentille durcissable.

22. Système selon la revendication 21, dans lequel au moins une des première et seconde moitiés du moule de lentille De contact qui comprend la couche de couleur comprend une couche claire placée entre la moitié du moule de lentille de contact et la couche de couleur.

23. Système selon la revendication 21, dans lequel ledit masque est placé adjacent à au moins une des moitiés du moule.

24. Système selon la revendication 23, dans lequel ladite pluralité d'ouvertures comprend des fentes, des orifices, ou toute combinaison de ceux-ci.

25. Système selon la revendication 24, dans lequel ladite pluralité d'ouvertures est agencée de façon azimutale.

26. Système selon la revendication 21, dans lequel ledit masque comprend un réflecteur de rayonnement.

27. Système selon la revendication 26, dans lequel ledit réflecteur de rayonnement comprend une forme conique.

28. Système selon la revendication 21, dans lequel ledit masque comprend une masse suffisante sous l'influence de la gravité ou de l'accélération pour exercer ladite pression.

29. Système selon la revendication 21, comprenant un dispositif chauffant pour chauffer la couche de couleur, la première moitié du moule, la seconde moitié du moule, le matériau de formation de lentille durcissable, ou toute combinaison de ceux- ci.

30. Système selon la revendication 29, dans lequel le dispositif chauffant est capable d'augmenter la température d'au moins une des couches de couleur, de la première moitié du moule, de la seconde moitié du moule, du matériau de formation de lentille durcissable, d'environ 5°C à 50°C.

31. Système selon la revendication 21, comprenant une pluralité d'assemblages de moules de lentille de contact.
